# EUROPÄISCHE PATENTSCHRIFT

(11) **EP 2 163 368 B1**
(45) Veröffentlichungstag und Bekanntmachung des Hinweises auf die Patenterteilung: **15.01.2014**
(21) Anmeldenummer: 09011465.3
(22) Anmeldetag: 08.09.2009
(51) Int. Cl.: B29C 45/14, B29C 45/04

(54) **Verfahren und Vorrichtung zur Herstellung von Kunststoffprodukten mit partiell vorgesehenen Verstärkungsstrukturen**
Method and device for producing plastic products with partially provided reinforcement structures
Procédé et dispositif de fabrication de produits en matière synthétique dotés de structures de renforcement partielles

(30) Priorität: 11.09.2008 DE 102008046908
(43) Veröffentlichungstag der Anmeldung: 17.03.2010
(73) Patentinhaber: KraussMaffei Technologies GmbH, 80997 München (DE)
(72) Erfinder: Urbanek, Otto, Dr., 4910 Ried im Innkreis (AT)
(74) Vertreter: Zollner, Richard

(56) Entgegenhaltungen:
- WO-A1-2007/076590
- WO-A1-2007/101747
- WO-A1-2009/019102
- JP-A- 63 135 214

## Beschreibung

Die vorliegende Erfindung betrifft ein Verfahren und eine Vorrichtung zur Herstellung von Kunststoffprodukten mit partiell vorgesehenen Verstärkungsstrukturen aus Fasern gemäß dem Oberbegriff der Ansprüche 1 bzw. 9.

Es ist hinreichend bekannt, Kunststoffprodukte unter Verwendung von Fasern zu verstärken, um besonderen mechanischen oder physikalischen Anforderungen gerecht zu werden. Insbesondere können besonders belastete Kunststoffprodukte mit zusätzlichen Verstärkungsstrukturen versehen sein. Diese Verstärkungen oder funktionale Komponenten werden umso wichtiger, als es einen kontinuierlichen Trend zu dünnwandigeren bzw. System-Kunststoffprodukten gibt. Dieser Trend resultiert insbesondere aus dem Verlangen, Material einzusparen, welches mit steigenden Rohstoffkosten wesentlich zum Herstellpreis eines Produktes beiträgt.

Bereits früher war es bekannt, bei bestimmten Produkten Verrippungen oder ähnliche externe Elemente zur mechanischen Verstärkung vorzusehen. Überdies ist es bekannt, getränkte oder imprägnierte Kunststoffmatten mit einem Kunststoffmaterial zu verpressen oder umzuformen und dann zu hinterspritzen.

Weiterhin gibt es seit einiger Zeit den Trend, mit Spritzgieß- oder Extrusionsmaschinen Fasern, insbesondere Glasfasern in die Kunststoffschmelze einzuarbeiten, um so die mechanischen Eigenschaften im gesamten Produkt zu verbessern. In diesen faserbeladenen Kunststoffen ist die Faserorientierung oft durch das Fließverhalten bedingt, so dass die Wirkrichtung nicht ohne weiteres vorgegeben werden kann. Überdies sind die meist kurzen Faserelemente bezüglich ihrer Richtung oft amorph und wahllos angeordnet. Damit ist es nicht möglich Verstärkungen in bestimmten Belastungsrichtungen auszubilden. Überdies ist es bei Spritzguss- oder Extrusionsanwendungen bislang nur möglich, begrenzte Faserlängen zu erzeugen, da die Fasern in der Plastifiziereinrichtung gebrochen, abgeschnitten oder anderweitig zerteilt werden.

In zunehmendem Maße wird Kunststoff in vielen High-Tech-Bereichen eingesetzt, bei denen nur in bestimmten Bereichen oder gerichtet hohe Belastungsspitzen vorliegen. Bei solchen Produkten ist es nicht notwendig, Verstärkungen über das gesamte Produkt vorzusehen; vielmehr müssten diese Teile nur partiell verstärkt werden, so dass die besonders belasteten Bereiche den besonderen mechanischen oder physikalischen Anforderungen standhalten. Dennoch sollten die Verstärkungsmaßnahmen in der Regel nicht erkennbar sein. Vielmehr ist es zumeist erwünscht, dass die entsprechenden Produkte über die gesamte Oberfläche gleiche optische und haptische Eigenschaften aufweisen.

Überdies gibt es einen Trend in Kunststoffprodukte unmittelbar funktionale Elemente mit einzuarbeiten. Diesbezüglich können beispielsweise Glasfasern als Lichtleiter erwähnt werden.

In der DE 198 54 883 ist ein Kunststoff-Bauteil und ein Verfahren zu dessen Herstellung beschrieben, bei dem zunächst eine thermoplastische Folie zur Verfügung gestellt wird, anschließend ein Fasermaterial in ein Werkzeug eingebracht wird und schließlich ein Kunststoff-Matrixmaterial injiziert wird, das das Fasermaterial durchtränkt. Eine partielle Verstärkung ist in diesem Dokument nicht angegeben.

Überdies wird auf die Dokumente DE 10 2005 060 147 A1, DE 10 2006 040 748 A1 und DE 10 2006 056 167 A1WO 2009/019102 A1 und WO 2007/076590 A1 als weitere Hintergrundinformation für Verfahren und Vorrichtungen zur Herstellung von faserverstärkten Produkten hingewiesen.

Die JP 63 135214 A befasst sich mit einer Technik, bei der Erkennungselemente in einem Produkt eingearbeitet werden.

Ausgehend von dem letzgenannten Stand der Technik ist es die Aufgabe der vorliegenden Erfindung, ein verbessertes Verfahren und eine verbesserte Vorrichtung zur Herstellung von Kunststoffen mit partiell vorgesehenen Verstärkungsstrukturen anzugeben.

Diese Aufgabe wird durch die in den Ansprüchen 1 und 9 genannten Merkmale verfahrensmäßig bzw. vorrichtungsmäßig gelöst. Vorteilhafte Weiterbildungen sind Gegenstand der abhängigen Ansprüche.

Demgemäß ist ein Kerngedanke der vorliegenden Erfindung darin zu sehen, dass auf einem Kunststoffgrundkörper, der in einem ersten Schritt formgerecht hergestellt wird, eine Struktur aus Fasern, insbesondere aus einzelnen Fasern aber auch ein Geflecht, Strickwerk, Vlies oder ähnliches Gebilde flächig aufgebracht und fixiert wird. In einem nachfolgenden Schritt wird die Struktur in der gleichen Maschine durch Aufbringen eines weiteren Kunststoffmaterials in das Gesamtkunststoffprodukt eingeformt und ist somit integrales Element des Gesamtproduktes. Sie kann daher auch andere funktionale Eigenschaften, wie eine Signalführung oder eine optische Eigenschaft besitzen.

Vorzugsweise wird der Kunststoffgrundkörper durch ein Extrudier- oder Spritzgussverfahren hergestellt. Die Herstellung geschieht auf der gleichen Maschine, die evtl. als Schiebetisch, Drehtisch oder Wendeplattenmaschine ausgebildet sein kann.

Alternativ kann der Kunststoffgrundkörper auch durch ein Reaktionsgießverfahren beispielsweise mit Polyurethan- oder einem anderen Duroplastmaterial hergestellt werden.

Nach dem Herstellen des Kunststoffgrundkörpers in einem ersten Schritt wird die Struktur durch entsprechendes Aufbringen einer Faser- oder Fadenstruktur gebildet. Dabei kann ein klar definiertes Aufbringen einer Faser- oder Fadenstruktur auf einem vorgegebenen Bereich des Kunststoffgrundkörpers ausgewählt sein. Diese Vorgehensweise kann auch durch eine der Maschine beigestellte Stick-, Strick-, Geflecht- oder Webvorrichtung erreicht werden, die nach einem vorgegebenen Muster arbeitet und die gewünschte Struktur, insbesondere Verstärkungsstruktur unmittelbar auf den Kunststoffgrundkörper aufträgt. Dabei können innerhalb des Verstärkungsbereiches auch höhere oder geringere Verstärkungsgrade abwechselnd ausgeprägt werden.

Sollte der Kunststoffgrundkörper beim Aufbringen der Verstärkungsstruktur noch plastisch weich oder noch nicht ausreagiert sein, so kann die Verstärkungsstruktur beim Aufbringen unmittelbar daran haften oder zumindest teilweise in dieses eingedrückt werden. Sollte eine vollständige Aushärtung oder Ausreaktion des Kunststoffgrundköpers bereits stattgefunden haben, so könnten die Faser- oder Fadenstrukturen in den Kunststoffgrundkörper eingestochen oder alternativ durch Aufbringung eines Klebematerials in einem Zwischenschritt fixiert werden. Weiterhin ist es möglich (insb. bei Fasern mit Thermoplastummantelung), die Verbindung mit dem Kunststoffgrundkörper durch Reibschweißen, Ultraschallschweißen oder dergleichen herbeizuführen.

Überdies ist es möglich, die Struktur vor dem Aufbringen zu imprägnieren. Diese Imprägnierung kann mit einem weiteren Kunststoffmaterial oder einem Klebematerial, einem Additiv oder einem Haftvermittler dargestellt werden.

Vor, gleichzeitig mit oder nach der Aufbringung der Verstärkungsstruktur können ferner weitere funktionale Elemente auf die Kunststoffgrundstruktur aufgebracht werden.

Auf diese Weise können separate Einrichtungen wie Sensoren, Lampen, Aktuatoren eingesetzt werden oder andererseits funktionalen Elemente integral mit der Verstärkungsstruktur ausgebildet sein. So können beispielsweise metallische Fäden in die Verstärkungsstruktur eingearbeitet werden, die eine elektrische Leitungsfunktion in Abhängigkeit von physikalischen Zuständen erfüllen und beispielsweise einen Riss oder Bruch detektieren oder aber auch eine andere Belastung - wie eine Dehnbelastung - sensieren.

Weitere Vorteile und Merkmale gehen aus den Patentansprüchen hervor.

Nachfolgend wird die vorliegende Erfindung anhand verschiedener Ausführungsbeispiele und mit Bezug auf die beigefügten Zeichnungen näher erläutert. Die Zeichnungen zeigen in
- Figur 1a: eine schematische Abbildung einer ersten Ausführungsform einer erfindungsgemäßen Maschine, mit der das erfindungsgemäße Verfahren durchgeführt werden kann,
- Figur 1b: eine schematische Abbildung wie Fig. 1a, jedoch in einem anderen Verfahrenszustand der Maschine,
- Figur 2a: eine schematische Darstellung einer weiteren Ausführungsform einer erfindungsgemäßen Maschine zur Durchführung des erfindungsgemäßen Verfahrens,
- Figur 2b: eine schematische Darstellung der Ausführungsform in Fig. 2a in einem anderen Verfahrenszustand der Maschine,
- Figur 3a: eine schematische Ausführungsform einer weiteren Maschine zur Durchführung des erfindungsgemäßen Verfahrens,
- Figur 3b: eine schematische Darstellung der Ausführungsform in Fig. 3a in einem anderen Verfahrensschritt der Maschine,
- Figur 3c: eine weitere schematische Darstellung der Ausführungsform in Fig. 3a in einer dritten Verfahrensposition der Maschine und
- Figuren 4a - 4c: schematische Darstellungen von partiell verstärkten Kunstgrundkörpern als Halbzeuge.

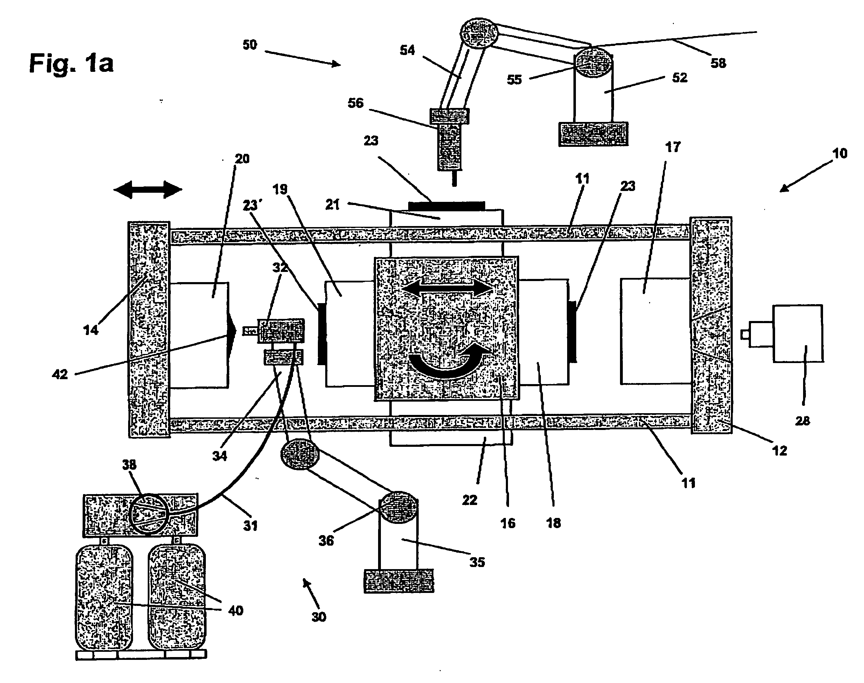

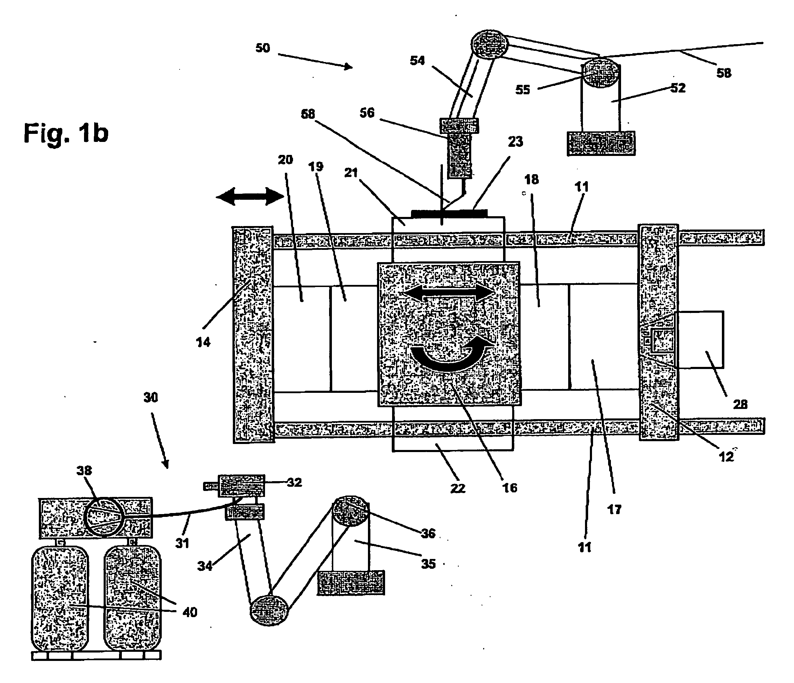

Eine erste Ausführungsform einer erfindungsgemäßen Vorrichtung zur Durchführung des erfindungsgemäßen Verfahrens ist in den Figuren 1a und 1b dargestellt. Darin ist eine Schließeinheit 10 zu erkennen, die eine feste Formaufspannplatte 12 und eine bewegliche Formaufspannplatte 14 (Beweglichkeit siehe Doppelpfeil) aufweist, welche über Holme 11 miteinander verbunden sind. Zwischen den beiden Aufspannplatten 12 und 14 ist eine in etwa kubisch ausgebildete Wendeplatte 16 als Mehrfach-Aufspannplatte auf einem Wendeplattenteller (nicht dargestellt) angeordnet, wobei die Wendeplatte 16 zusammen mit dem Wendeplattenteller ebenfalls in Richtung der beweglichen Aufspannplatte verschieblich und zudem noch drehbar (vgl. Pfeile) angeordnet sind.

Sowohl an der festen Formaufspannplatte 12 als auch an der beweglichen Formaufspannplatte sind Formwerkzeughälften 17 bzw. 20 angeordnet. Überdies sind weitere Formwerkzeughälften 18, 19, 21 und 22 an den vier Seiten der Wendeplatte 16 befestigt. Die vier Formwerkzeughälften 18, 19, 21 und 22 sind jeweils identisch zueinander ausgebildet.

Im Bereich der festen Aufspannplatte 12 ist (nur schematisch dargestellt) eine Plastifizier- und Einspritzeinheit 28 vorgesehen, die über einen entsprechenden Trichter an das Werkzeug 17 angedockt werden kann. In an sich bekannter Weise kann damit eine Kunststoffschmelze aus der Plastifizier- und Einspritzeinheit 28 in die Kavität eines aus den Formwerkzeughälften 17 und 18 bestehenden, geschlossenen Werkzeugs eingespritzt werden (wie dies beispielsweise in Fig. 1b dargestellt ist). Im rechten Bereich der Schließeinheit ist eine Polyurethaneinheit 30 angeordnet, bei der ein Mischkopf 32 an einem Robotarm 34 beweglich befestigt ist. Der Robotarm 34 weist verschiedene Gelenke (u. a. Bezugszeichen 36) auf und ist über eine Halterung 35 an einer festen Struktur gehalten. Über den Robotarm 34 kann der Mischkopf 32 in einer gewünschten und programmierbaren Weise bewegt werden und die Positionen einnehmen, wie sie beispielsweise in den Figuren 1a und 1b dargestellt sind.

Zum Mischkopf 32 sind schematisch Zuführleitungen 31 ausgebildet, die von Pumpen 38 stammen, welche Material aus Behältern 40 zum Mischkopf 32 fördern. Entsprechende Polyurethaneinheiten 30 mit Behältern, Dosiereinheiten und Mischköpfen sind aus dem Stand der Technik vielfach bekannt. Sie brauchen vorliegend nicht in besonderem Detail beschrieben zu werden.

Entscheidend bei dem Ausführungsbeispiel in den Figuren 1 ist die Einrichtung 50 zur Aufbringung eines Verstärkungsfadens auf einen Kunststoffgrundkörper (nachfolgend noch beschrieben), wie dies in den Figuren 1a und 1b im oberen Bereich dargestellt ist. Dabei ist ein Strick-, Stick- oder ähnlicher Kopf 56 an einem weiteren Robotarm 54 befestigt, der wiederum über Gelenke (beispielsweise Bezugszeichen 55) in gewünschter programmierbarer Weise bewegt werden kann. Der Robotarm ist über eine weitere Halterung 52 an einer festen Struktur befestigt. Dem Robotarm wird ein Verstärkungsfaden 58 zugeführt, der zur Spitze des Kopfes 56 geführt ist, wo er verarbeitet werden kann.

Die Arbeitsweise der vorgenannt beschriebenen Ausführungsform ist wie folgt:
Zunächst wird die Schließeinheit 10 geschlossen, wie dies in Figur 1b dargestellt ist. Dadurch bildet sich eine Kavität zwischen den Werkzeughälften 17 und 18 aus, in die ein aufgeschmolzenes Thermoplastmaterial mittels der Plastifizier- und Einspritzeinheit 28 eingebracht wird.

Nach dem zumindest teilweisen Aushärten des Thermoplastmaterials wird die Schließeinheit 10 geöffnet und die Wendeplatte (in den Fig. 1a und 1b) um 90° im Gegenuhrzeigersinn gedreht.

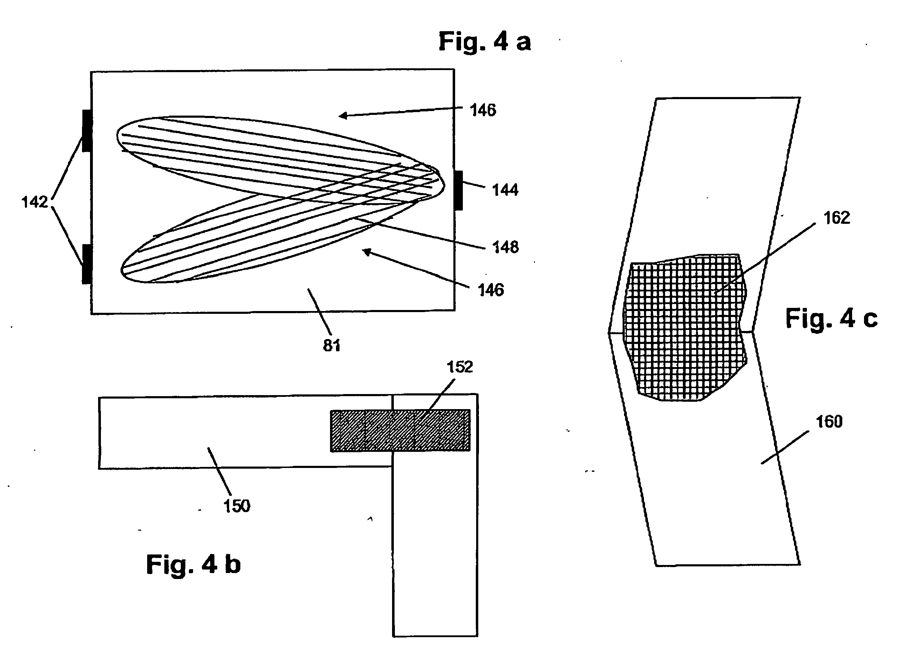

Wenn nun das Werkzeug wieder geschlossen wird, ist gleichzeitig an der Werkzeughälfte 21 das in dem vorhergehenden Zyklus hergestellte Kunststoffprodukt 23, das den Kunststoffgrundkörper bildet, gehalten. Auf diesen Kunststoffgrundkörper 23 wird durch entsprechende Bewegung des Kopfes 56 der Verstärkungsfaden in einem Verstärkungsbereich in einer gewünschten Weise aufgebracht. Dabei kann der Kopf 56 mit einer Nadel ausgebildet sein, die den Faden an vordefinierten Stellen in den Kunststoffgrundkörper 23 einbringt und nach Art einer Stick- oder Nähmaschine Fadenbahnen zieht. Darstellungen solcher Fadenverläufe sind in den Figuren 4a, 4b und 4c angegeben. Diese Fäden können unidirektional oder kreuzweise oder dergleichen verlegt werden. Alternativ ist es möglich, den Kopf als Web- oder Strickkopf auszubilden, der ein entsprechendes Gewebe, Vlies oder Strickwerk erzeugt und dieses auf den zu verstärkenden Flächen aufbringt.

Neben der Verstärkungsstruktur können überdies weitere funktionale Elemente wie Sensoren oder dergleichen aufgebracht werden. Insbesondere kann dies durch Einarbeiten von Fäden oder anderen Elementen in den Verstärkungsbereich geschehen. So kann das Gewebe, Strickwerk oder Vlies partiell Metallfäden oder ähnliche Elemente aufweisen, die später aktuatorisch oder sensorisch betrieben werden.

Nach dem Aufbringen der Verstärkungsstruktur auf partielle Bereiche des Kunststoffgrundkörpers und einem gleichzeitigen erneuten Herstellen eines Kunststoffgrundkörpers in den Formwerkzeughälften 17 und 18 wird die Schließeinheit 10 wieder geöffnet und die Wendeplatte wiederum um 90° im Gegenuhrzeigersinn gedreht. Damit kommt nun der partiell verstärkte Kunststoffgrundkörper im Bereich eines zweiten Werkzeugs zu liegen, das aus den Werkzeughälften 19 und 20 besteht.

Nunmehr wird auf die Kavitätsoberfläche des geöffneten Werkzeugs 20 mittels des Mischkopfes 32 ein Polyurethanmaterial aufgebracht, wie in Fig. 1a dargestellt ist. Nach dem Herausfahren des Mischkopfes 32 aus dem Bereich des Werkzeuges 19, 20 wird die Schließeinheit 10 wieder geschlossen, wodurch das Polyurethanmaterial 42 auf den Kunststoffgrundkörper aufgeprägt oder aufgepresst wird und sich entsprechend der durch die Werkzeuge 19 und 20 vorgegebenen Kavität verformt. Dabei wird die Verstärkungsstruktur vollständig eingehüllt und der Kunststoffgrundkörper zumindest teilweise, vorzugsweise aber vollflächig überflutet und beschichtet. Nach dem zumindest teilweisen Aushärten des Polyurethanmaterials 42 wird die Schließeinheit 10 wieder geöffnet und Wendeplatte 16 wiederum um 90° gedreht, so dass nunmehr ein fertiges, partiell verstärktes Kunststoffprodukt der Werkzeughälfte 22 entnommen werden kann.

In der vorbeschriebenen Weise kann bei jedem Zyklus in den Formwerkzeughälften 17, 18 ein Kunststoffgrundkörper hergestellt, am Werkzeug 21 eine partielle Verstärkungsstruktur aufgebracht und in den Formwerkzeughälften 19, 20 eine Beschichtung vorgenommen werden. Insofern entsteht damit bei jedem Zyklus auch ein neues Produkt, das anschließend der Schließeinheit 10 entnommen werden kann. Dabei können beliebige Verstärkungsstrukturen nach einer entsprechender Programmierung des Robotarmes bzw. des Kopfes 56 in partieller Weise erzeugt werden, wie dies beispielhaft in den Figuren 4 angegeben ist.

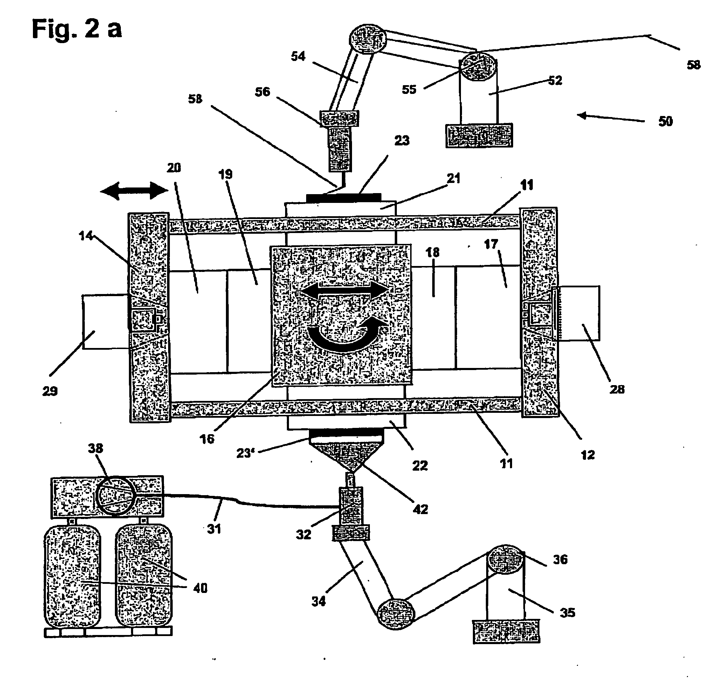

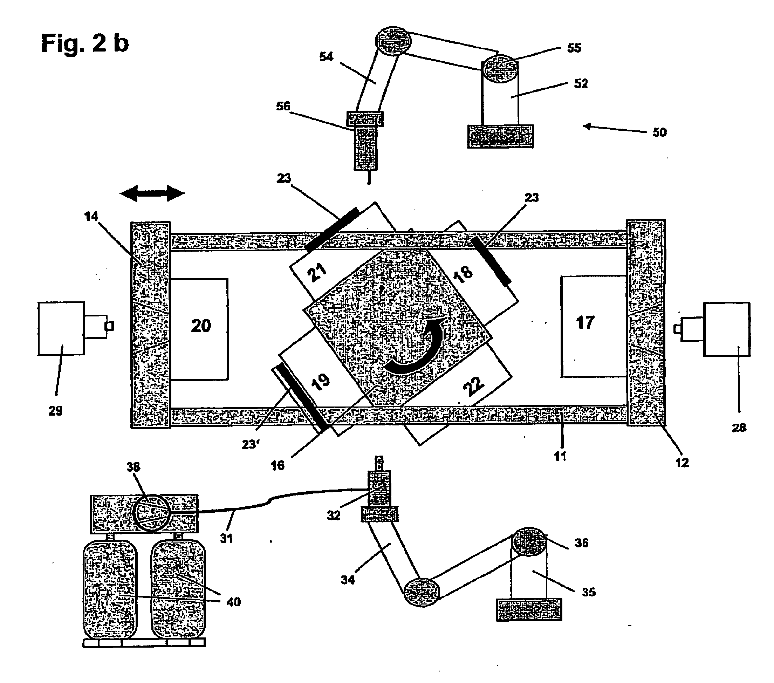

Eine weitere Ausführungsform der vorliegenden Erfindung ist in den Figuren 2a und 2b dargestellt, wobei gleiche Bezugszeichen gleiche Elemente der Ausführungsform bezeichnen. Im Gegensatz zu der Ausführungsform in den Figuren 1 ist nunmehr eine weitere Plastifizier- und Einspritzeinheit 29 dargestellt, mit der ein weiteres Thermoplastmaterial in eine weitere Kavität der Formwerkzeughälften 19 und 20 eingebracht werden kann.

Nunmehr wird in einem ersten Schritt in einer Kavität zwischen den Formwerkzeughälften 17 und 18 ein erstes Kunststoffprodukt, nämlich der Kunststoffgrundkörper 23 hergestellt, der an der Werkzeughälfte 21 - wie auch im vorhergehenden Beispiel - mit der Verstärkungsstruktur in der vorgenannten Weise versehen wird. Nach einer 90°-Drehung entgegen dem Uhrzeigersinn wird nun zwischen den Werkzeugen 20 und 21 ein zweites Thermoplastmaterial aufgetragen, so dass die Verstärkungsstruktur sandwichartig zwischen zwei Thermoplaststrukturen zu liegen kommt (in der Fig. 2b ist die zweite Struktur mit dem Bezugszeichen 23' gekennzeichnet). In einem weiteren Bearbeitungsschritt wird nun auf dem Werkzeug 22 ein Oberflächenmaterial mittels eines Polyurethan-Mischkopfes aufgesprüht; alternativ kann die Oberfläche lackiert werden. Auf diese Art und Weise kann eine partielle Verstärkungsstruktur auch in einem einheitlichen Thermoplastkörper hergestellt werden.

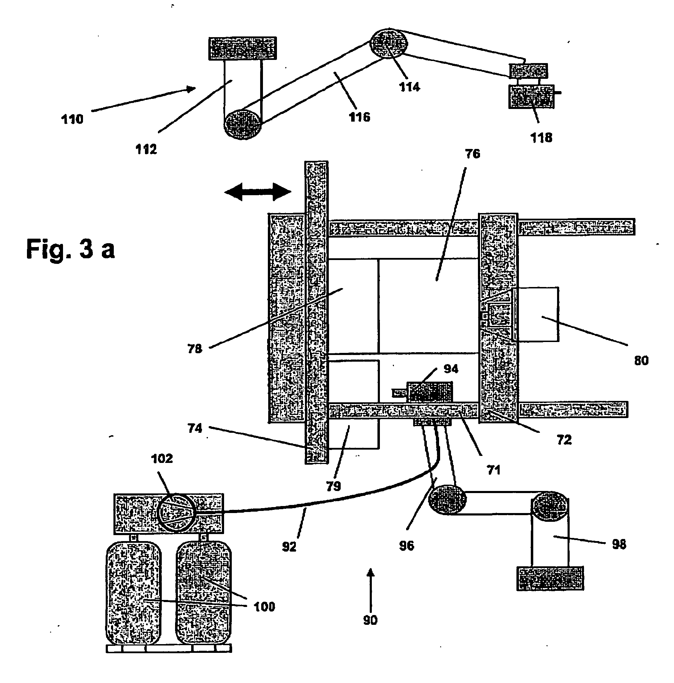

Eine weitere Ausführungsform der vorliegenden Erfindung ist in den Figuren 3a bis 3c dargestellt. Wiederum ist eine Schließeinheit 70 vorgesehen, die eine feste Werkzeugaufspannplatte 72 und eine in Doppelpfeilrichtung bewegliche Werkzeugaufspannplatte 74 aufweist, die wiederum mittels Holmen miteinander verbunden sind.

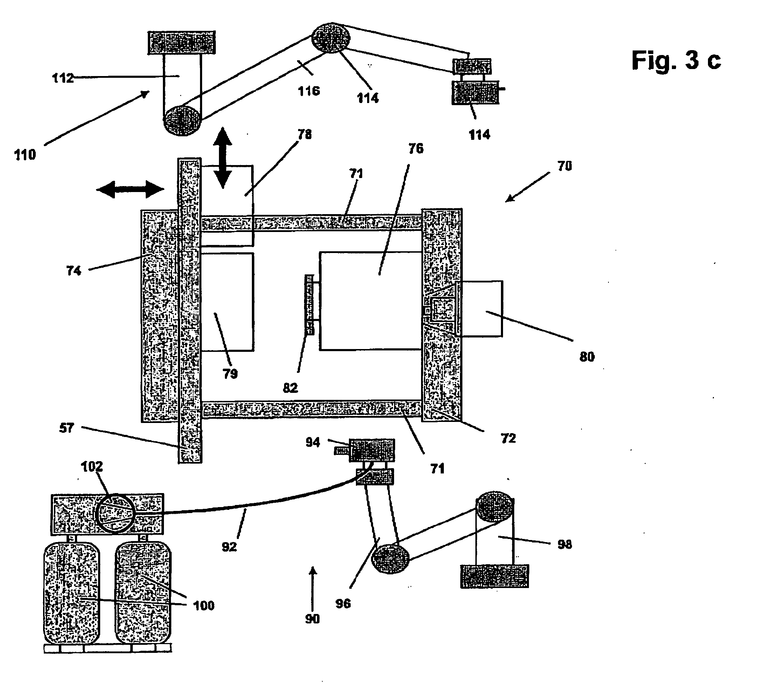

Im Unterschied zu den vorherigen Ausführungsformen weist die bewegliche Werkzeugaufspannplatte 74 nunmehr eine Verschiebeeinheit auf, mittels der die beiden Formwerkzeughälften 78 und 79 in Richtung des Doppelpfeils (vgl. Fig. 3c) verschoben werden können. Damit ist es möglich, die beiden Werkzeughälften 78 und 79 wahlweise gegenüber dem auf der festen Aufspannplatte 72 angeordneten Werkzeug 76 zu positionieren. Wiederum ist eine Einrichtung 110 zum Aufbringen eines Verstärkungsfadens vorgesehen, die einen Kopf 118 an einem Robotarm 116 befestigt besitzt, der über Gelenke (beispielsweise Bezugszeichen 114) bewegbar ist und an einer Halterung 112 gehalten ist. In gleicher Weise wie auch vorher kann der Kopf 118 über den Robotarm 116 in der erforderlichen Weise verschwenkt und in den Bereich des Werkzeugs eingefahren betrieben werden.

Wiederum ist auch eine Polyurethaneinrichtung 90 vorgesehen, die in analoger Weise zu den vorhergehenden Figuren einen Mischkopf 94 an einem Robotarm 96 befestigt aufweist, wobei der Robotarm 96 wiederum über eine Halterung 98 starr befestigt ist. Die entsprechenden reaktiven Materialien werden aus Behältnissen 100 über Pumpen 102 und Versorgungsleitungen 92 zur Verfügung gestellt.

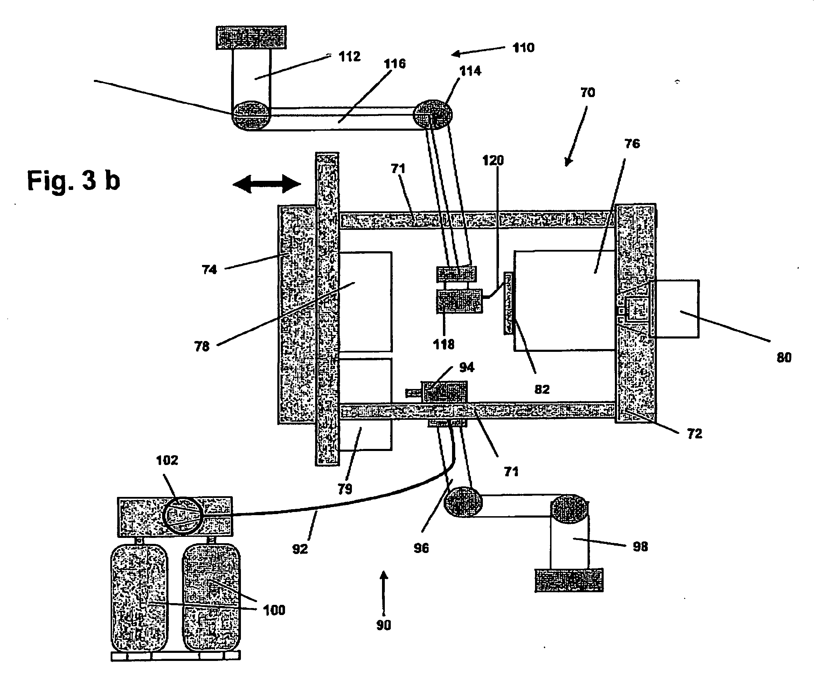

Beim Betrieb dieser Ausführungsform wird nun in einem ersten Schritt zwischen den Formwerkzeughälften 76 und 78 mittels der Einspritzeinheit 80 ein Thermoplastmaterial eingebracht, das als Kunststoffgrundkörper 82 dient. Nach dem Aushärten und Öffnen des Werkzeugs wird (vgl. Fig. 3b) eine Fadenstruktur mit dem Verstärkungsfaden und mittels des Kopfes 118 in gewünschter Weise partiell auf den Kunststoffgrundkörper 82 aufgetragen. Gleichzeitig wird die Formwerkzeughälfte 79 mittels des Mischkopfes 94 mit Polyurethanmaterial besprüht. Anschließend wird über den Schiebetisch die Werkzeughälfte 79 gegenüberliegend dem Werkzeug 76 angeordnet und die Schließeinheit geschlossen, wodurch das Polyurethanmaterial auf den Kunststoffgrundkörper unter Einschluss der partiellen Verstärkungsstruktur aufgeprägt wird.

Mit den so beschriebenen Vorrichtungen können die partiellen Verstärkungsstrukturen bei Halbfertigprodukten (Kunststoffgrundkörpern), wie sie in den Figuren 4a bis 4c mit den Bezugszeichen 140, 150 und 160 dargestellt sind, aufgebracht werden. So ist in Fig. 4a ein Halbfertigprodukt dargestellt, welches beispielsweise eine Automobiltür darstellen kann, welche zwei Scharniere 42 und ein Türschloss 144 aufweist. Auf den Kunststoffgrundkörper sind in Verstärkungsbereichen 146 nur schematisch dargestellt Fäden 148 aufgebracht. Diese Fäden können natürlich entweder aufgestickt, aufgestrickt, aufgewebt etc. sein. Wesentlich ist, dass der entsprechende Verstärkungseffekt durch eine gerichtete Aufbringung erreicht wird, so dass die Krafteinleitungspunkte entsprechend verstärkt miteinander verbunden sind.

In Fig. 4b ist im Winkelübergangsbereich eine Verstärkungsstruktur aufgebracht, um dort die Torsions- und Zugeigenschaften dieses Elements zu stärken. Dabei ist vorliegend im Verstärkungsbereich 152 ein Vlies aufgetragen, das über die einen entsprechende Kopf direkt am Produkt hergestellt wird.

Ein Gewebe ist in dem Verstärkungsbereich 162 an dem Produkt 160 dargestellt. Auch dieses Gewebe lässt sich über eine entsprechende Webvorrichtung ohne weiteres unmittelbar an der Maschine und am Produkt herstellen.

Natürlich können noch eine Vielzahl weitere Bearbeitungseinrichtungen vorgesehen sein, mit denen in den verschiedenen Verfahrensabschnitten Beschichtungen, Belegungen, Bearbeitungen etc. durchgeführt werden können.

Mit der vorliegenden Erfindung können in unzähligen Gestaltungsvarianten Verstärkungsstrukturen auf beliebige Kunststoffgrundkörper aufgebracht werden, so dass gerade bei dünnen oder hoch belasteten Bauteilen die gewünschten mechanischen, thermischen, physikalischen oder andere Eigenschaften erzeugt werden können. Auch können entsprechende funktionale Elemente mit eingeformt werden, die im Bereich der Verstärkungsstruktur eventuell notwendig sind.

### Bezugszeichenliste

- 10: Schließeinheit
- 11: Holm
- 12: Feste Formaufspannplatte
- 14: Bewegliche Formaufspannplatte
- 16: Wendeplatte
- 17: Werkzeughälfte an der festen Formaufspannplatte
- 18,19: Werkzeughälften an der Wendeplatte
- 21,22 20: Werkzeughälfte an der beweglichen Formaufspannplatte
- 23, 23': Werkstück
- 28: (Erste) Einspritzeinheit
- 29: Zweite Einspritzeinheit
- 30: Polyurethan-Einheit
- 31: Versorgungsleitung
- 32: Mischkopf
- 34: Robotarm
- 35: Halterung
- 36: Gelenk
- 38: Pumpe
- 40: Behältnisse
- 42: Polyurethanmaterial
- 50: Einrichtung zum Aufbringen von Verstärkungsfäden
- 52: Halterung
- 54: Robotarm
- 56: Strickkopf
- 58: Verstärkungsfaden

- 70: Schließeinheit
- 71: Holm
- 72: Feste Werkzeugaufspannplatte
- 74: Bewegliche Werkzeugaufspannplatte
- 76: Werkzeughälfte an der festen Werkzeugaufspannplatte
- 78: Werkzeughälfte 1 auf der beweglichen Werkzeugaufspannplatte
- 79: Werkzeughälfte 2 auf der beweglichen Werkzeugaufspannplatte
- 80: Einspritzeinheit
- 82: Werkstück
- 82': Beschichtetes Werkstück
- 90: Polyurethaneinheit
- 92: Versorgungsleitung
- 94: Mischkopf
- 96: Robotarm
- 98: Halterung
- 100: Behältnisse
- 102: Pumpe

- 110: Einrichtung zum Aufbringen eines Verstärkungsfaden
- 112: Halterung
- 114: Gelenk
- 116: Robotarm
- 118: Strickkopf
- 120: Verstärkungsfaden

- 140: Halbfertigprodukt
- 142: Scharnier
- 144: Schloss
- 146: Verstärkungsbereich
- 148: Faden
- 150: Halbfertigprodukt
- 152: Verstärkungsbereich
- 160: Halbfertigprodukt
- 162: Verstärkungsbereich

## Patentansprüche

1. Verfahren zur Herstellung von Kunststoffprodukten mit partiell vorgesehenen Vestärkungsstrukturen, bei dem in einem ersten Schritt mit einer Maschine ein Kunststoffgrundkörper durch einen Gieß- oder Spritzgießvorgang formgerecht hergestellt wird und dieser Kunststoffgrundkörper (23; 82) in einem nachfolgenden Schritt mit der gleichen Maschine zumindest teilweise mit einem weiteren Kunststoffmaterial (42) beschichtet wird,
**dadurch gekennzeichnet, dass**
zwischen dem ersten und dem zweiten Schritt lediglich auf einen vorgegebenen Teil des Kunststoffgrundkörpers (23; 82) mit der gleichen Maschine eine Verstärkungsstruktur aus Fasern, insbesondere aus einzelnen Fasern, aber auch ein Geflecht, Strickwerk, Vlies oder ähnliches flächig aufgebracht und an dem Kunststoffgrundkörper (23; 82) fixiert wird und wobei in dem nachfolgenden Schritt mit dem Aufbringen des weiteren Kunststoffmaterials die Verstärkungsstruktur zumindest im Wesentlichen zwischen dem Kunststoffgrundkörper (23; 82) und dem weiteren Kunststoffmaterial (42) eingeformt wird.

2. Verfahren nach Anspruch 1,
**dadurch gekennzeichnet,**
**dass** der Kunststoffgrundkörper (23; 82) durch einen Extrudier- oder Spritzgussverfahren hergestellt wird.

3. Verfahren nach Anspruch 1,
**dadurch gekennzeichnet,**
**dass** der Kunststoffgrundkörper (23; 82) durch ein Reaktionsgießverfahren hergestellt wird.

4. Verfahren nach einem der Ansprüche 1 bis 3,
**dadurch gekennzeichnet,**
**dass** die Struktur durch das Auflegen eines Vlieses, Gewirkes, Gestrickes oder dergleichen auf den Kunststoffgrundkörper (23; 82) gebildet wird.

5. Verfahren nach einem der Ansprüche 1 bis 3,
**dadurch gekennzeichnet,**
**dass** die Struktur durch das definierte Aufbringen einer Faser- oder Fadenstruktur auf den Kunststoffgrundkörper (23; 82) hergestellt wird.

6. Verfahren nach einem der Ansprüche 1 bis 5,
**dadurch gekennzeichnet,**
**dass** vor dem Aufbringen der Struktur ein Klebematerial auf die Bereiche aufgetragen wird.

7. Verfahren nach einem der vorhergehenden Ansprüche 1 bis 6,
**dadurch gekennzeichnet,**
**dass** die Struktur vor dem Aufbringen imprägniert wird.

8. Verfahren nach einem der vorhergehenden Ansprüche,
**dadurch gekennzeichnet,**
**dass** vor, gleichzeitig oder nach der Aufbringung der Struktur weitere funktionale Elemente auf die Kunststoffgrundstruktur (23; 82) oder die Verstärkungsstruktur aufgebracht werden.

9. Vorrichtung zur Herstellung von Kunststoffprodukten mit partiell vorgesehenen Verstärkungsstrukturen, umfassend
- ein erstes Formwerkzeug mit einer ersten Formwerkzeughälfte (17; 76) und einer zweiten Formwerkzeughälfte (18, 19, 21, 22; 78) zur Ausbildung einer Kunststoffgrundstruktur (23; 82),
- einer ersten Austragseinrichtung (28; 80), die mit dem ersten Formwerkzeug zur Einbringung von Kunststoffmaterial in das erste Formwerkzeug koppelbar ist,
- ein zweites Formwerkzeug mit einer ersten Formwerkzeughälfte (20; 76) und einer zweiten Formwerkzeughälfte (18, 19, 21, 22; 79) zur Ausbildung einer Kunststoffschicht auf der Kunststoffgrundstruktur (23; 82),
- einer zweiten Austragseinrichtung (32; 94), die mit dem zweiten Formwerkzeug zur Einbringung eines weiteren Kunststoffmaterials (42) in das zweite Formwerkzeug koppelbar ist,
**dadurch gekennzeichnet, dass**
produktionsmäßig zwischen dem ersten und dem zweiten Formwerkzeug eine Station (50; 110) vorgesehen ist, um eine Verstärkungsstruktur aus Fasern lediglich auf einen vorgegebenen Teil des Kunststoffgrundkörpers (23; 82) auf diesen aufzutragen und zu fixieren.

10. Vorrichtung nach Anspruch 9,
**dadurch gekennzeichnet,**
**dass** es sich bei der ersten und oder der zweiten Ausbringvorrichtung um eine Extrudervorrichtung, eine Plastifizier- und Einspritzvorrichtung und/oder eine Reaktionsgießvorrichtung handelt.

11. Vorrichtung nach einem der Ansprüche 9 oder 10,
**dadurch gekennzeichnet,**
**dass** die Station (50; 110) zur Auftragung der Struktur ausgebildet ist, um einen oder mehrere Verstärkungsfäden (58; 120) nach einem vorgegebenen Muster auf den Kunststoffgrundkörper (23; 82) aufzutragen.

12. Vorrichtung nach Anspruch 11,
**dadurch gekennzeichnet,**
**dass** die Station (50; 110) zur Auftragung der Struktur ausbildet ist, um eine Maschenware, ein Gewebe oder ein Vlies herzustellen.

13. Vorrichtung nach Anspruch 12,
**dadurch gekennzeichnet,**
**dass** die Station (50; 110) zur Auftragung der Struktur gleichzeitig zur Einbringung eines funktionalen Elements auf oder in die Verstärkungsstruktur ausgebildet ist.

14. Vorrichtung nach einem der Ansprüche 9 bis 13,
**dadurch gekennzeichnet,**
**dass** eine Vorrichtung zur Aufbringung eines Klebe- oder Fixiermittels für die Struktur vorgesehen ist.

15. Vorrichtung nach einem der Ansprüche 9 bis 14,
**dadurch gekennzeichnet,**
**dass** die beiden Formwerkzeuge in einer einheitlichen Schließeinrichtung angeordnet sind.

16. Vorrichtung nach einem der Ansprüche 9 bis 15,
**dadurch gekennzeichnet,**
**dass** Formwerkzeughälften sowohl dem ersten wie auch dem zweiten Formwerkzeug zuordenbar sind.

17. Vorrichtung nach einem der Ansprüche 9 bis 16,
**dadurch gekennzeichnet,**
**dass** eine Bearbeitungseinrichtung zum Bearbeiten des Kunststoffgrundkörpers vorgesehen ist.

18. Vorrichtung nach einem der Ansprüche 9 bis 17,
**dadurch gekennzeichnet,**
**dass** eine Bearbeitungseinrichtung zum Bearbeiten des aus Kunststoffgrundkörper, Struktur und weiterer Kunststoffschicht bestehenden Produktes vorgesehen ist.

## Claims

1. A method for the production of plastic products with partially provided reinforcement structures, in which in a first step a plastic base body is produced in the proper form by a machine by a casting or injection moulding process, and this plastic base body (23; 82) in a subsequent step by the same machine is coated at least partially with a further plastic material (42),
**characterized in that**
between the first and the second step, a reinforcement structure of fibres, in particular of individual fibres, but also a mesh, knit, non-woven material or similar is applied in a planar manner with the same machine only onto a predetermined part of the plastic base body (23; 82) and is fixed on the plastic base body (23; 82), and wherein in the following step with the application of the further plastic material the reinforcement structure is moulded at least substantially between the plastic base body (23; 82) and the further plastic material (42).

2. The method according to Claim 1, **characterized in that** the plastic base body (23; 82) is produced by an extrusion- or injection moulding method.

3. The method according to Claim 1, **characterized in that** the plastic base body (23; 82) is produced by a reaction moulding method.

4. The method according to one of Claims 1 to 3, **characterized in that** the structure is formed by the applying of a non-woven material, warp-knitted fabric, weft-knitted fabric or suchlike onto the plastic base body (23; 82).

5. The method according to one of Claims 1 to 3, **characterized in that** the structure is produced by the defined application of a fibre- or thread structure onto the plastic base body (23; 82).

6. The method according to one of Claims 1 to 5, **characterized in that** before the application of the structure, an adhesive material is applied onto the regions.

7. The method according to one of the preceding Claims 1 to 6, **characterized in that** the structure is impregnated before the application.

8. The method according to one of the preceding claims, **characterized in that** before, at the same time as or after the application of the structure, further functional elements are applied onto the plastic base structure (23; 82) or the reinforcement structure.

9. A device for the production of plastic products with partially provided reinforcement structures, comprising
- a first mould with a first mould half (17; 76) and a second mould half (18, 19, 21, 22; 78) for the formation of a plastic base structure (23; 82),
- a first application arrangement (28; 80) which is able to be coupled with the first mould for the introduction of plastic material into the first mould,
- a second mould with a first mould half (20; 76) and a second mould half (18, 19, 21, 22; 79) for the formation of a plastic layer on the plastic base structure (23; 82),
- a second application arrangement (32; 94), which is able to be coupled with the second mould for the introduction of a further plastic material (42) into the second mould,
**characterized in that**
in accordance with the production, a station (50; 110) is provided between the first and the second mould, in order to apply and fix a reinforcement structure of fibres only onto a predetermined part of the plastic base body (23; 82).

10. The device according to Claim 9, **characterized in that** the first and or the second application device is an extruder device, a plasticizing- and injecting device and/or a reaction moulding device.

11. The device according to one of Claims 9 or 10, **characterized in that** the station (50; 110) is constructed for the application of the structure, in order to apply one or more reinforcement threads (58; 120) according to a predetermined pattern onto the plastic base body (23; 82).

12. The device according to Claim 11, **characterized in that** the station (50; 110) is constructed for the application of the structure, in order to produce a knitted fabric, a woven fabric or a non-woven material.

13. The device according to Claim 12, **characterized in that** the station (50; 110) is constructed for the application of the structure simultaneously to the introduction of a functional element on or into the reinforcement structure.

14. The device according to one of Claims 9 to 13, **characterized in that** a device is provided for the application of an adhesive- or fixing means for the structure.

15. The device according to one of Claims 9 to 14, **characterized in that** the two moulds are arranged in a single closing device.

16. The device according to one of Claims 9 to 15, **characterized in that** mould halves are able to be associated both with the first and also with the second mould.

17. The device according to one of Claims 9 to 16, **characterized in that** a processing arrangement is provided for processing the plastic base body.

18. The device according to one of Claims 9 to 17, **characterized in that** a processing arrangement is provided for processing the product consisting of plastic base body, structure and further plastic layer.

## Revendications

1. Procédé de fabrication de produits en matière synthétique dotés de structures de renforcement partielles, dans lequel, au cours d'une première étape, un corps de base en matière synthétique est fabriqué conformément, par un procédé de coulée ou de moulage par injection avec une machine, et ce corps de base en matière synthétique (23 ; 82) est revêtu au moins partiellement d'un matériau en matière synthétique supplémentaire (42) au cours d'une étape consécutive avec la même machine,
**caractérisé en ce**
**qu'**entre la première et la seconde étape, une structure de renforcement en fibres, en particulier en fibres individuelles mais aussi un tissage, un tricotage, un non-tissé ou similaire, est appliquée en surface avec la même machine uniquement sur une partie prédéfinie du corps de base en matière synthétique (23 ; 82) et sachant qu'à l'étape suivante, avec l'application du matériau en matière synthétique supplémentaire (42), la structure de renforcement est formée au moins essentiellement entre le corps de base en matière synthétique (23 ; 82) et le matériau en matière synthétique supplémentaire (42).

2. Procédé selon la revendication 1, **caractérisé en ce que** le corps de base en matière synthétique (23 ; 82) est fabriqué par un procédé d'extrusion ou de moulage par injection.

3. Procédé selon la revendication 1, **caractérisé en ce que** le corps de base en matière synthétique (23 ; 82) est fabriqué par un procédé de coulée à réaction.

4. Procédé selon l'une des revendications 1 à 3, **caractérisé en ce que** la structure est formée par la pose d'un non-tissé, d'un tissage, d'un tricotage ou similaire sur le corps de base en matière synthétique (23 ; 82).

5. Procédé selon l'une des revendications 1 à 3, **caractérisé en ce que** la structure est fabriquée par l'application définie d'une structure de fibres ou de fils sur le corps de base en matière synthétique (23 ; 82).

6. Procédé selon l'une des revendications 1 à 5, **caractérisé en ce qu'**un matériau collant est appliqué sur les zones avant l'application de la structure.

7. Procédé selon l'une des revendications 1 à 6, **caractérisé en ce que** la structure est imprégnée avant l'application.

8. Procédé selon l'une des revendications précédentes, **caractérisé en ce qu'**avant, en même temps que ou après l'application de la structure, d'autres éléments fonctionnels sont appliqués sur la structure de base en matière synthétique (23 ; 82) ou la structure de renforcement.

9. Dispositif de fabrication de produits en matière synthétique dotés de structures de renforcement partielles, comprenant
- un premier outil de formage comprenant une première moitié d'outil de formage (17 ; 76) et une seconde moitié d'outil de formage (18, 19, 21, 22 ; 78) pour former une structure de base en matière synthétique (23 ; 82),
- un premier dispositif d'application (28 ; 80) qui peut être couplé au premier outil de formage pour introduire de la matière synthétique dans le premier outil de formage,
- un second outil de formage comprenant une première moitié d'outil de formage (20 ; 76) et une seconde moitié d'outil de formage (18, 19, 21, 22 ; 79) pour former une couche de matière synthétique sur la structure de base en matière synthétique (23 ; 82),
- un second dispositif d'application (32 ; 94) qui peut être couplé au second outil de formage pour introduire de la matière synthétique supplémentaire (42) dans le second outil de formage,
**caractérisé en ce que**
conformément à la production, un poste (50 ; 110) est prévu entre les premier et second outils de formage pour appliquer une structure de renforcement en fibres uniquement sur une partie prédéfinie du corps de base en matière synthétique (23 ; 82) et la fixer.

10. Dispositif selon la revendication 9, **caractérisé en ce que** les premier et/ou second dispositifs d'application sont un dispositif d'extrusion, un dispositif de plastification et d'injection et/ou un dispositif de coulée à réaction.

11. Dispositif selon l'une des revendications 9 ou 10, **caractérisé en ce que** le poste (50 ; 110) pour appliquer la structure est formé pour appliquer un ou plusieurs fil(s) de renfort (58 ; 120) selon un modèle prédéfini sur le corps de base en matière synthétique (23 ; 82).

12. Dispositif selon la revendication 11, **caractérisé en ce que** le poste (50 ; 110) pour appliquer la structure est formé pour fabriquer des mailles, un tissu ou un non-tissé.

13. Dispositif selon la revendication 12, **caractérisé en ce que** le poste (50 ; 110) pour appliquer la structure est formé parallèlement pour introduire un élément fonctionnel sur ou dans la structure de renfort.

14. Dispositif selon l'une des revendications 9 à 13, **caractérisé en ce qu'**un dispositif est prévu pour appliquer un moyen de colle ou de fixation pour la structure.

15. Dispositif selon l'une des revendications 9 à 14, **caractérisé en ce que** les deux outils de formage sont disposés dans un dispositif de fermeture unique.

16. Dispositif selon l'une des revendications 9 à 15, **caractérisé en ce que** les deux moitiés d'outil de formage peuvent être associées tant au premier qu'au second outil de formage.

17. Dispositif selon l'une des revendications 9 à 16, **caractérisé en ce qu'**un dispositif d'usinage est prévu pour usiner le corps de base en matière synthétique.

18. Dispositif selon l'une des revendications 9 à 17, **caractérisé en ce qu'**un dispositif d'usinage est prévu pour usiner le produit constitué par le corps de base en matière synthétique, la structure et la couche de matière synthétique supplémentaire.
